# EUROPÄISCHE PATENTSCHRIFT

(11) **EP 3 246 125 B1**
(45) Veröffentlichungstag und Bekanntmachung des Hinweises auf die Patenterteilung: **27.10.2021**
(21) Anmeldenummer: 17171527.9
(22) Anmeldetag: 17.05.2017
(51) Int. Cl.: B23B 1/00

(54) **WERKZEUGSCHWENKAGGREGAT FÜR EINE DREHMASCHINE**
PIVOTING TOOL UNIT FOR A ROTATING MACHINE
MODULE ORIENTABLE POUR OUTIL POUR UNE MACHINE ROTATIVE

(30) Priorität: 17.05.2016 DE 102016109036
(43) Veröffentlichungstag der Anmeldung: 22.11.2017
(73) Patentinhaber: Vandurit GmbH Hartmetall und Diamantwerkzeuge, 51379 Leverkusen (DE)
(72) Erfinder:
(74) Vertreter: Grundmann, Dirk

(56) Entgegenhaltungen:
- EP-A1- 1 366 851
- WO-A1-2011/029944
- DE-B3-102004 026 675

## Beschreibung

### Gebiet der Technik

Die Erfindung betrifft ein an einer Befestigungsstelle eines Werkzeugträgers einer Drehmaschine befestigbares Werkzeugschwenkaggregat, mit einem Befestigungselement zur Befestigung des Werkzeugschwenkaggregates an der Befestigungsstelle, mit einer Antriebswelle, die mit einem Rotationsantrieb eines Servomotors gekuppelt oder mit einem Rotationsantrieb des Werkzeugträgers kuppelbar ist und mittels einer Rotationsbewegung des Rotationsantriebes um eine Antriebswellenachse antreibbar ist und mit einer um 90° gegenüber der Antriebswelle geneigten, von der Antriebswelle angetriebenen Abtriebswelle zum Antrieb eines Werkzeugs.

Die Erfindung betrifft darüber hinaus eine Vorrichtung zum spanenden Bearbeiten eines um eine Drehachse einer Werkstückspindel rotierenden Werkstücks mit einem relativ parallel zur Drehachse und relativ quer dazu verlagerbaren Werkzeugträger, der zumindest eine Befestigungsstelle zur Befestigung eines Werkzeugschwenkaggregats aufweist.

### Stand der Technik

Die DE 10 2006 011 300 B3 beschreibt eine Vorrichtung und ein Verfahren zum Drehbearbeiten von Werkstücken. Ein Werkstück wird von einem Futter einer Werkstückspindel drehangetrieben. Ein Werkzeugträger ist in einer Vorschubebene verlagerbar. Der Werkzeugträger trägt eine um eine Schwenkachse verschwenkbare Schneidplatte, die am freien Ende eines Armes eines Werkzeughalters sitzt. Die Schneidplatte lässt sich derart relativ gegenüber dem Werkstück verlagern, dass ihre Schneidkante beim Schnitt eine abrollende Bewegung auf der zu bearbeitenden Fläche des Werkstücks vollführt.

Die GB 2 195 928 A beschreibt einen Halter, der um eine Schwenkachse schwenkbar ist und an seinem freien Ende eine Spankante ausbildet, so dass mit dem Halter eine Kreisbogenförmige Fläche spanend bearbeitet werden kann.

Eine komplexe Werkzeugmaschine, mit der sowohl Fräs- als auch Drehbearbeitungen möglich sind, beschreibt die US 6,565,497 B1. Auf einem Werkzeugträger, der in einer Vorschubebene verlagerbar ist, sitzt ein Fräswerkzeug, welches um eine Schwenkachse senkrecht zur Vorschubebene verläuft, verschwenkt werden kann.

Aus der US 6,578,453 B1 ist ein Bearbeitungsverfahren zum Erzeugen von Innenflächen vorbekannt.

Die DE 199 63 897 B4, die DE 10 2004 026 675 B3 (welche die Basis für die zweiteilige Form von Anspruch 1 bildet), DE 101 44 649 oder DE 10 2007 033 820 A1 beschreiben jeweils ein Verfahren zum Drehbearbeiten von rotationssymmetrischen Werkstücken und eine zugehörige Vorrichtung sowie eine zur Drehbearbeitung verwendbare Schneidplatte. Bei der Drehbearbeitung wird das Schneidwerkzeug um eine parallel zur Drehachse des Werkstücks verlaufenden Achse gedreht, so dass eine Spanabtragstelle sowohl entlang der zu bearbeitenden Fläche als auch entlang der Schneidkante wandert.

Aus der DE 10 2005 037 665 B3 ist eine Werkzeugmaschine vorbekannt, bei dem eine Schneidplatte am Ende eines bei der Drehbearbeitung um eine Schwenkachse schwenkbaren Halters befestigt ist. Die Schwenkachse verläuft hier parallel zur Drehachse des Werkstücks.

Die DE 103 93 255 T5 beschreibt eine Werkzeugmaschine zum Drehbearbeiten eines Werkstücks, bei der eine rautenförmige Schneidplatte während des Vorschubs um eine Schwenkachse geschwenkt wird, die sich quer zur Drehachse des Werkstücks erstreckt. Hierdurch soll der Spanwinkel oder der Flankenfreiwinkel während des Vorschubs geändert werden.

Die US 5,713,253 beschreibt eine Vorrichtung und ein Verfahren zur Drehbearbeitung eines Werkstücks, bei dem eine sich parallel zur Drehachse erstreckende Schwenkachse zum Verschwenken eines Werkzeughalters vorgesehen ist, so dass die Schneidplatte beim Drehbearbeiten verschwenkt werden kann.

Die US 6,775,586 B2 beschreibt einen auf einem Kreuztisch verlagerbaren Werkzeughalter, der ein Fräswerkzeug hält, dessen Achse im Raum verschwenkt werden kann.

### Zusammenfassung der Erfindung

Der Erfindung liegt die Aufgabe zugrunde, Mittel anzugeben, um das zuvor beschriebene Verfahren, bei dem die Schneidkante beim spanenden Bearbeiten der zu bearbeitenden Fläche an der zu bearbeitenden Fläche abrollt, auf einer Standarddrehmaschine durchführbar ist.

Gelöst wird die Aufgabe durch die in den Ansprüchen angegebene Erfindung.

Bei dem der Erfindung zugrunde liegenden Verfahren zum Drehbearbeiten eines rotationssymmetrischen Werkstücks wird eine Schneidplatte mit zumindest einer Schneidkante verwendet. Die Schneidplatte sitzt am Ende eines Halters, der um eine Schwenkachse verschwenkt werden kann. Die Schwenkachse wird von einem Schwenkantriebsaggregat ausgebildet, welches in der Vorschubebene verlagerbar ist. Die Vorschubebene erstreckt sich dabei senkrecht zur Schwenkachse und wird nicht von der Drehachse des Werkstücks geschnitten. Eine elektronische Steuerung koordiniert die Schwenkbewegung mit der Vorschubbewegung in der Vorschubebene derart, dass sich die Schneidkante an der zu bearbeitenden Fläche abrollt, so dass die Spanabtragsstelle nicht nur entlang der zu bearbeitenden Fläche, sondern auch entlang der Schneidkante wandert. Die Schneidkante verläuft bevorzugt auf einer konvexen Konturlinie, die sich in der Schwenkeben erstreckt. Die Schneidkante kann aber auch gerade oder entlang einer konkaven Konturlinie verlaufen, wenn damit ballige Flächen erzeugt werden sollen. Die Schneidplatte kann ein oder mehrere, insbesondere auf sich schneidenden Konturlinien verlaufende Schneidkanten aufweisen. Mit einer derartigen Vorrichtung lassen sich Zylindermantelflächen, Planflächen, Kegelstumpfmantelflächen oder Freiformflächen drehbearbeiten.

Zur Lösung der oben genannten Aufgabe schlägt die Erfindung zunächst ein an einer Befestigungsstelle eines Werkzeugträgers einer Drehmaschine befestigbares Werkzeugschwenkaggregat vor, mit einem Befestigungselement zur Befestigung des Werkzeugschwenkaggregates an der Befestigungsstelle, mit einer Antriebswelle, die mit einem Rotationsantrieb des Werkzeugträgers kuppelbar ist und mittels einer Rotationsbewegung des Rotationsantriebes um eine Antriebswellenachse schwenkantreibbar ist und mit einem Werkzeughalter zur Halterung einer Schneidplatte, die mittels des Rotationsantriebes in einer Schwenkebene verschwenkbar ist. Die Abtriebswelle steht somit senkrecht zur Flächennormalen eines Kreuztisches und nicht parallel zur Flächennormalen des Kreuztisches. Der Anspruch 2 zeigt eine alternative Lösung der Aufgabe. Die folgenden Merkmale können einzeln oder in Kombination zur Weiterbildung von sowohl der im Anspruch 1 als auch der im Anspruch 2 angegebenen Vorrichtung verwendet werden. Das Werkzeugschwenkaggregat ist auf einem Werkzeugträger befestigt bzw. befestigbar.

Der Werkzeugträger kann ortsfest dem Maschinengestell zugeordnet sein. Er kann aber auch gegenüber dem Maschinengestell verlagerbar sein. Es sind Mittel vorgesehen, um die Relativbewegung zwischen Werkstück und Werkzeugträger zu realisieren. Hierzu kann die das Werkstück tragende Werkstückspindel in einer Vorschubebene verlagert werden. Es ist aber auch vorgesehen, dass die Werkstückspindel ortsfest dem Maschinengestell zugeordnet ist und der Werkzeugträger relativ gegenüber dem Maschinengestell in der Vorschubebene verlagerbar ist. Es ist aber auch vorgesehen, dass sich sowohl der Werkzeugträger als auch das Werkstück bzw. die Werkstückspindel relativ gegenüber dem Maschinengestell in der Vorschubebene verlagern lassen. Es sind Befestigungselemente vorgesehen, um das Werkzeugschwenkaggregat am Werkzeugträger zu befestigen. Die Befestigungselemente können von einer Befestigungsplatte ausgebildet sein, die beispielsweise mittels Befestigungsschrauben am Werkzeugträger befestigbar ist. Es ist aber auch vorgesehen, das Befestigungselement so auszugestalten, dass es an einem als Revolver ausgebildeten Werkzeugträger befestigbar ist. Die Befestigung des Werkzeugschwenkaggregates erfolgt bevorzugt mittels einer Anlagefläche, die mit einer Befestigungsfläche der Befestigungsstelle in eine Flächenanlage gebracht werden kann. Von dieser Befestigungsfläche ragt ein Befestigungsschaft ab. Ein Werkzeugträger kann eine Befestigungsöffnung besitzen, in die der Befestigungsschaft eingesteckt werden kann. Das Befestigungselement des erfindungsgemäßen Werkzeugschwenkaggregates ist ein Befestigungsschaft. Die Befestigungselemente sind insbesondere derart ausgebildet, dass sie Befestigungsstandards erfüllen, um ohne zusätzliche Adapter direkt an einem Werkzeugträger mit Standardbefestigungsmitteln befestigt werden zu können. Es ist eine Antriebswelle vorgesehen, die mit einem Rotationsantrieb eines Servomotors gekuppelt ist. Der Servomotor kann Bestandteil des Werkzeugschwenkaggregats sein. Es ist aber auch vorgesehen, dass die Antriebswelle mit einem Rotationsantrieb des Werkzeugträgers kuppelbar ist. Beispielsweise kann im Befestigungsschaft eine Schaftwelle angeordnet sein, die an ihrem freien Ende einen Mitnehmer trägt, der mit einem Rotationsantrieb des Werkzeugträger, beispielsweise eines Revolvers kuppelt, wenn die Befestigungsstelle eine Arbeitsposition einnimmt. Ein derartiger Revolver kann auf voneinander verschiedenen Befestigungsstellen eine Vielzahl von drehantreibbaren Werkzeugen, beispielsweise Bohrern, tragen, die jeweils mit dem Rotationsantrieb gekuppelt werden, wenn die zugeordnete Befestigungsstelle ihre Arbeitsposition einnimmt. Die Antriebswelle kann über Bewegungsübertragungselemente mit der Schaftwelle des Befestigungsschaftes drehverbunden werden. Hierzu kann beispielsweise ein Zahnradgetriebe, ein Kettengetriebe oder ein Riemengetriebe vorgesehen sein. Die Schaftwelle kann aber auch eine Verlängerung der Antriebswelle sein. Es kann ein Winkelgetriebe vorgesehen sein, mit dem die Drehbewegung der Antriebswelle um 90° auf eine Abtriebswelle übertragen wird. Die Abtriebswelle dient zum Verschwenken des Werkzeuges. Hierzu wird die Abtriebswelle um ihre Figurenachse um einen Schwenkwinkel verschwenkt. Erfindungsgemäß ist ein Werkzeughalter drehfest mit der Abtriebswelle verbunden und dient der Halterung einer Schneidplatte, die mittels des Rotationsantriebes in einer senkrecht zur Abtriebswellenachse sich erstreckenden Schwenkebene verschwenkbar ist. Durch eine koordinierte Verschwenkung des Werkzeughalters mit einer Bewegung des Werkzeugträgers in der Vorschubebene kann die insbesondere auf einer Kreisbogenlinie verlaufende Schneidkante eine abrollende Schnittbewegung an der zu bearbeitenden Fläche vollführen. Dabei wandert die Spanabtragsstelle sowohl entlang der Schneidkante als auch entlang der zu bearbeitenden Fläche des Werkstücks, wobei die Geschwindigkeit, mit der die Spanabtragsstelle entlang der Fläche wandert, gleich oder verschieden sein kann von der Geschwindigkeit, mit der die Spanabtragsstelle entlang der Schneidkante wandert. Die Schneidkante liegt in der Schwenkebene, die somit gleichzeitig eine Schneidkantenebene ausbildet. Die Schneidplatte kann eine oder mehrere Schneidkanten aufweisen. Die Schneidkanten verlaufen bevorzugt auf Krümmungslinien. Die Krümmungslinien schneiden sich in zumindest einem Schnittpunkt. Die Antriebswelle kann mit der im Befestigungsschaft angeordneten Schaftwelle über ein Zahnradgetriebe oder ein Riemengetriebe bewegungsgekoppelt sein. Die Schaftwelle besitzt an ihrem freien Ende einen Mitnehmer, der in der Arbeitsposition der Befestigungsstelle mit dem Rotationsantrieb des Werkzeugträgers kuppelt. Die Drehbewegung des Rotationsantriebes wird bevorzugt mit einem der Werkzeugmaschine zugeordneten Servoantrieb erzeugt. Sie wird über ein Winkelgetriebe auf die Abtriebswelle übertragen. Das Winkelgetriebe kann derart quer zum Befestigungsschaft versetzt angeordnet sein, dass der Befestigungsschaft in der Schwenkebene liegt. Hierzu kann ein Versatzarm vorgesehen sein, der an einem Armende den Befestigungsschaft und an einem anderen Armende ein Getriebegehäuse trägt, in dem das Winkelgetriebe sitzt. Bei dem Winkelgetriebe handelt es sich bevorzugt um ein Kegelradgetriebe. Es ist bevorzugt vorgesehen, dass im Getriebezug zwischen Antriebsschaft und Abtriebsschaft ein Untersetzungsgetriebe vorgesehen ist, das eine Rotationsbewegung des Antriebsschaftes in eine Schwenkbewegung überträgt. Das Untersetzungsverhältnis liegt bevorzugt bei mindestens 1 : 10, bevorzugt aber bei mindestens 1 : 100. Als Untersetzungsgetriebe kommt insbesondere ein Kugelumlaufgetriebe in Betracht, wie es in der EP 0 422 263 B1 beschrieben wird. Es kann ein Schwenkwinkelgeber vorgesehen sein, der einer Maschinensteuerung den Ist-Wert der Schwenkstellung des Werkzeughalters liefert. Es ist aber auch möglich, dass mit einem Drehgeber die Winkelstellung der Antriebswelle an die Steuerung gegeben wird. Es kann eine Verstelleinrichtung vorgesehen sein, mit der die axiale Lage des Werkzeughalters auf der Abtriebswelle eingestellt werden kann. Es handelt sich hier bevorzugt um eine Feineinstellung, um die Schwenkebene des Werkzeughalters bzw. die Schnittkantenebene, die von der Achse der Abtriebswelle senkrecht geschnitten wird, derart quer zur Erstreckungsrichtung des Befestigungsschaftes zu verlagern, dass die Schwenkebene bzw. Schneidkantenebene in der Achse der Schaftwelle liegt. In einer Variante der Erfindung ist vorgesehen, dass der Servomotor Bestandteil des Werkzeugschwenkaggregates ist. Die Motorwelle des Servomotors bildet dann einen Rotationsantrieb, der mit der Antriebswelle gekuppelt ist, welche bevorzugt über ein Winkelgetriebe und ein Untersetzungsgetriebe mit der Abtriebswelle gekuppelt ist. Es kann ein Stützelement vorgesehen sein, auf dem sich ein Arm, der insbesondere ein Getriebegehäuse trägt, des Werkzeugschwenkaggregates abstützt. Das Stützelement kann einen Befestigungsschaft ausbilden, der in eine Öffnung des Revolvers eingesteckt werden kann, die sich in Umfangsrichtung des Revolvers beabstandet zu der Öffnung befindet, in der der Befestigungsschaft des Werkzeugschwenkaggregates steckt. Der Versatzarm kann die Anlagefläche ausbilden, mit der das Werkzeugschwenkaggregat am Werkzeugträger befestigbar ist. In ihrer Arbeitsstellung liegt die Anlagefläche in einer Tangentialebene zur Drehachse des Werkstücks. Ein verlängerter Abschnitt der Anlagefläche stützt sich auf dem Stützelement ab. Die Flächennormalen der Anlagefläche erstreckt sich radial zur Drehachse. Die Abtriebsachse steht senkrecht zur Flächennormalen der Anlagefläche. Mit dem erfindungsgemäßen Werkzeugschwenkaggregat kann eine Standard-Drehmaschine ertüchtigt werden, um mit dem eingangs beschriebenen Verfahren Planflächen, Zylindermantelflächen, Kegelstumpfmantelflächen oder Freiflächen zu bearbeiten, wobei bei der Bearbeitung eine Schneidkante an der zu bearbeitenden Fläche abrollt. Das Werkzeugschwenkaggregat kann mit Standardbefestigungsmitteln an einer Standardbefestigungsstelle der Drehmaschine befestigt werden. Die Schwenkbewegung des Schwenkarmes wird bevorzugt von einem Servomotor erzeugt, wobei eine Rotationsbewegung in eine Schwenkbewegung übertragen wird.

### Kurze Beschreibung der Zeichnungen

Im Folgenden wird die Erfindung anhand von Ausführungsbeispielen näher erläutert. Es zeigen:
- Fig. 1: ein erstes Ausführungsbeispiel der Erfindung in einer Ansicht auf die Drehachse 1 eines Werkstücks 2;
- Fig. 2: zur Verdeutlichung des Verfahrens ein mehrere zu bearbeitende Flächen 7, 7', 7" aufweisendes Werkstück 2 und eine an einem Haltearm 5 befestigte, drei Schneidkanten 4, 4', 4" aufweisende Schneidplatte 6, die um eine Schwenkachse 9 in einer Vorschubebene x, y verlagerbar ist;
- Fig. 3: ein zweites Ausführungsbeispiel der Erfindung in einer Darstellung gemäß Fig. 1;
- Fig. 4: ein drittes Ausführungsbeispiel der Erfindung in einer Seitenansicht;
- Fig. 5: das dritte Ausführungsbeispiel in einer Draufsicht;
- Fig. 6: ein viertes Ausführungsbeispiel der Erfindung in einer Darstellung gemäß Fig. 1;
- Fig. 7: ein fünftes Ausführungsbeispiel der Erfindung in einer Darstellung gemäß Fig. 1;
- Fig. 8: ein sechstes Ausführungsbeispiel der Erfindung in einer Darstellung ähnlich Fig. 1;
- Fig. 9: das sechste Ausführungsbeispiel mit Blick in Richtung des Pfeiles IX in Fig. 8 und
- Fig. 10: ein siebtes Ausführungsbeispiel der Erfindung in einer Darstellung gemäß Fig. 9.

### Beschreibung der Ausführungsformen

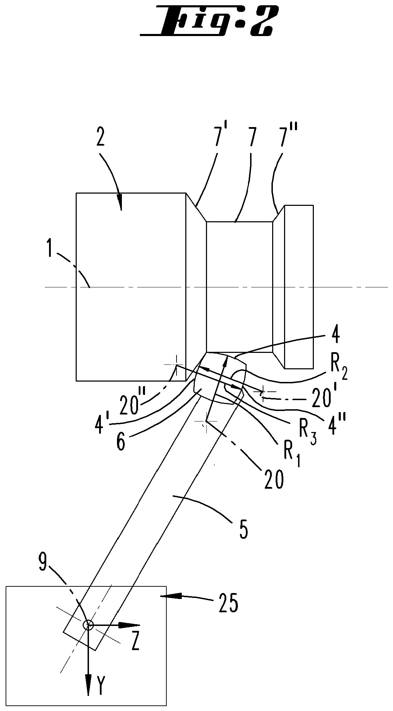

Die Figur 2 zeigt grob schematisch ein Drehbearbeitungsverfahren, mit dem ein oder mehrere zu bearbeitende Flächen 7, 7', 7" von einer drei Schneidkanten 4, 4', 4" aufweisenden Schneidplatte 6 bearbeitet werden können. Die Schneidplatte 6 befindet sich am freien Ende eines als Arm ausgebildeten Werkzeughalters 5. Das feste Ende des Armes 5 ist mit einem Werkzeugschwenkaggregat 25 verbunden. Das Werkzeugschwenkaggregat 25 besitzt eine um eine Schwenkachse 9 verschwenkbare Abtriebswelle 8, an der der Halter 5 befestigt ist, so dass der Halter 5 gegenüber dem Werkzeugschwenkaggregat verschwenkt werden kann.

Das Werkzeugschwenkaggregat 25 ist darüber hinaus in einer Vorschubebene in den Raumrichtungen Y und Z gegenüber einer Werkzeugspindel zur Halterung des Werkstücks 2 verlagerbar. Hierzu sitzt das Werkzeugschwenkaggregat 25 auf einem in der Figur 2 nicht dargestellten Werkzeugträger. Zum Vorschub kann entweder der Werkzeugträger oder das ebenfalls nicht dargestellte Spannfutter, welches das Werkstück 2 hält, in der Vorschubebene y, z verlagert werden. Die Schneidplatte 6 besitzt insgesamt vier sich jeweils entlang von Kreisbogenlinien erstreckende Schneidkanten 4, 4', 4". Die Bogenlinien sind mit Radien R₁, R₂, R₃ um Punkte 20, 20', 20" dargestellt.

Um eine der zu bearbeitenden Flächen 7, 7', 7" spanend zu bearbeiten, rollt die jeweils zugeordnete Schneidkante 4, 4', 4" auf der zu bearbeitenden Fläche 7, 7', 7" ab, wobei die Schneidplatte 6 jeweils um einen der Punkte 20, 20', 20" rotiert. Die Punkte 20, 20', 20" bilden somit virtuelle Schwenkachsen der Schneidplatte 6 aus.

Bei der spannenden Bearbeitung kann die Schneidplatte aber nicht nur eine reine abrollende Bewegung durchführen. Die Schneidplatte 6 kann zusätzlich relativ gegenüber der zu bearbeitenden Fläche verlagert werden, so dass die Spanabtragsstelle mit einer anderen Geschwindigkeit entlang der zu bearbeitenden Fläche 7, 7', 7" wandert als entlang der jeweiligen Schneidkante 4, 4', 4".

Mit dem in der Figur 2 dargestellten erfindungsgemäßen Verfahren können mehrere zu bearbeitende Flächen 7, 7', 7" unmittelbar aufeinander folgend bearbeitet werden, beispielsweise indem zunächst die Kegelstumpfmantelfläche 7' mittels der Schneidkante 4' bearbeitet wird und anschließend die Zylindermantelfläche 7 mittels der Schneidkante 4 und schließlich die Kegelstumpfmantelfläche 7" mittels der Schneidkante 4" bearbeitet werden. Zur Erzielung der abrollenden Bewegung einer der Schneidkanten 4, 4', 4" entlang der zugeordneten zu bearbeitenden Fläche 7, 7', 7" wird die Schwenkbewegung des Werkzeughalters 5 um die Schwenkachse 9 mit der Vorschubbewegung in der Vorschubebene y, z koordiniert. Die virtuellen Schwenkachsen 20, 20', 20" verlagern sich dabei analog einer Achse eines auf der zu bearbeitenden Fläche 7, 7', 7" abrollenden Rades. Die Bewegungsrichtung der virtuellen Schwenkachse 20, 20', 20" ist also eine Kurve, die parallel zu einer Schnittlinie durch die zu bearbeitende Fläche 7, 7', 7" verläuft.

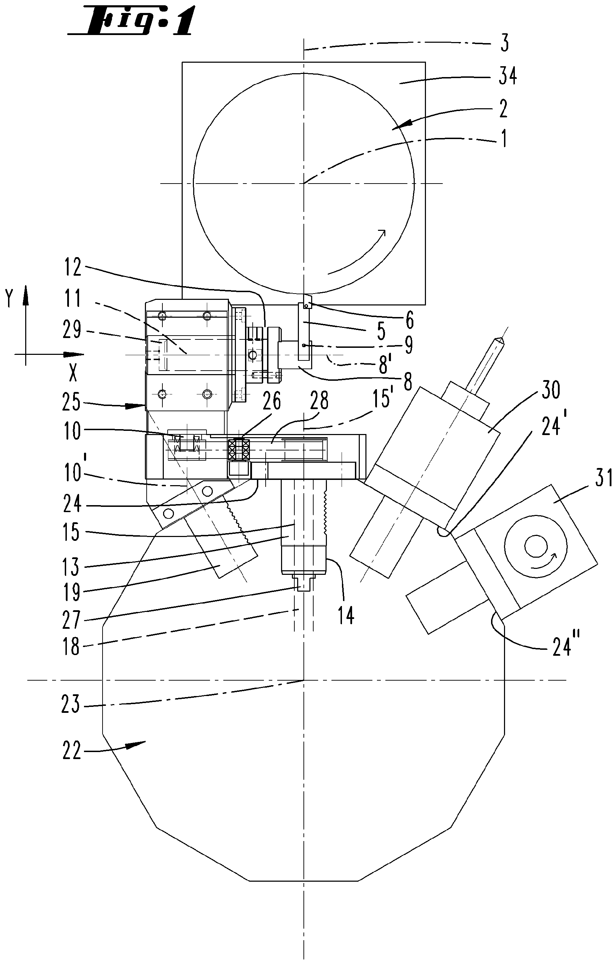

Die Figur 1 zeigt grob schematisch eine Standard-Drehmaschine, bei der ein Werkstück 2 mittels eines Vorschubantriebs 34 sowohl in Achsrichtung der Drehachse 1 (z-Achse) des Werkstücks 2 als auch quer dazu (y-Achse) verlagert werden kann. Eine Achse 23 des Werkzeugträgers 22 verläuft parallel zur Drehachse 1.

Der Werkzeugträger 22 wird von einem Revolver ausgebildet. Er besitzt eine Vielzahl von Befestigungsstellen 24, 24', 24". Jede Befestigungsstelle 24, 24', 24" wird von einer Mehrkantfläche des mehrkantigen Werkzeugträgers 22 ausgebildet. Jede der Befestigungsstellen kann durch eine getaktete Verdrehung des Werkzeugträgers 22 um seine Achse 23 in eine Arbeitsstellung gebracht werden. Die Befestigungsstelle weist dann in Richtung auf die Drehachse 1 des Werkstücks 2. Auf den voneinander verschiedenen, in gleichmäßiger Winkelverteilung um die Achse 23 angeordneten Befestigungsstellen 24, 24', 24" kann jeweils ein Bearbeitungswerkzeug angeordnet sein. Beim Ausführungsbeispiel ist auf der Befestigungsstelle 24" ein Radialbohrer 30, auf einer anderen Befestigungsstelle 24" ein Axialbohrer 31 und auf der Befestigungsstelle 24 ein erfindungsgemäßes Werkzeugschwenkaggregat 25 angeordnet. Das Werkzeugschwenkaggregat 25, der Radialbohrer 30 und der Axialbohrer 31 können in der Arbeitsstellung, in der sie jeweils eine Position einnehmen, in der die Befestigungsstelle 24, 24', 24" auf die Drehachse 1 weist, von einem Rotationsantrieb 18 des Werkzeugträgers 22 drehangetrieben werden. Hierzu kuppelt ein Mitnehmer 27 mit dem Rotationsantrieb 18.

Beim Werkzeugschwenkaggregat 25 sitzt der Mitnehmer 27 am Ende einer Schaftwelle 15, die sich innerhalb eines Befestigungsschaftes 13 erstreckt, der in einer Befestigungsöffnung 14 des Werkzeugträgers 22 steckt. Der Befestigungsschaft 13 ragt von einem Versatzarm 26 ab, in dem sich ein Bewegungsübertragungsmittel 28 in Form eines Riemenantriebs befindet. Ein Getriebegehäuse befindet sich seitlich versetzt zum Befestigungsschaft 13 am Versatzarm 26. Darin erstreckt sich eine Antriebswelle 10, die über den Riemenantrieb 28 mit der Schaftwelle 15 bewegungsgekuppelt ist. Die Antriebswelle 10 erstreckt sich parallel, aber seitlich versetzt zur Schaftwelle 15 und ist mit einem in den Zeichnungen nicht näher dargestellten Winkelgetriebe verbunden, bei dem es sich um eine Kegelradverzahnung handeln kann. Es ist ein Untersetzungsgetriebe 29 vorgesehen, welches die Drehbewegung der Antriebswelle 10 um mindestens einen Faktor zehn, bevorzugt aber mindestens einen Faktor hundert untersetzt. Es kann sich um ein Kugelumlaufgetriebe handeln. Eine Abtriebswelle 8 wird somit durch eine Rotationsbewegung der Antriebswelle 10 bzw. der Schaftwelle 15 um die Schwenkachse 9, bei der es sich um die Figurenachse der Abtriebswelle 8 handelt, verschwenkt. Eine Vielzahl von Umdrehungen der Antriebswelle 10 wird durch das Untersetzungsgetriebe in eine Schwenkbewegung des Werkzeughalters 5 um einen Schwenkwinkel von weniger als 360° untersetzt.

Die Abtriebswelle 8 ist um 90° gegenüber der Antriebswelle 10 geneigt und ist abtriebsseitig mit dem Untersetzungsgetriebe verbunden. Die Abtriebswelle 8 bildet die zuvor beschriebene Schwenkachse 9, mit der ein fest an der Abtriebswelle 8 befestigter Halter 5 in einer Schwenkebene 3 verschwenkt werden kann.

Es ist eine Verstelleinrichtung 12 vorgesehen, mit der sich die Axialposition des Halters 5 gegenüber dem Getriebegehäuse des Werkzeugschwenkaggregates 25 einstellen lässt, so dass die Schwenkebene 3 bzw. die Schneidkantenebene der Schneidkanten 4 derart axial, bezogen auf die Schwenkachse 9, verlagert werden kann, dass die Schaftwellenachse 15' der Schaftwelle 15 in der Schwenkebene bzw. Schneidkantenebene 3 liegt.

In einer Befestigungsöffnung, die neben der Befestigungsöffnung 14 angeordnet ist, steckt ein Stützelement 19. Auf dem Stützelement 19 stützt sich der das Getriebegehäuse tragende Abschnitt des Versatzarmes 26 ab.

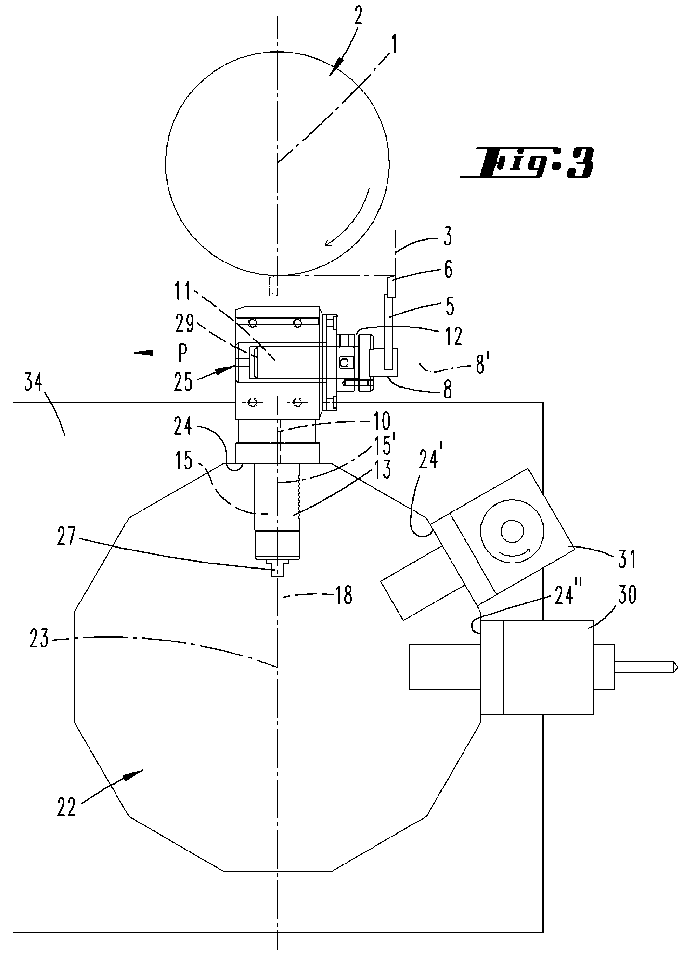

Bei dem in der Figur 3 dargestellten Ausführungsbeispiel ist das Getriebegehäuse des Werkzeugschwenkaggregates 25 unmittelbar oberhalb des Befestigungsschaftes 13 angeordnet, so dass die Antriebswelle 10 die axiale Verlängerung der Schaftwelle 15 ist. Bei diesem Ausführungsbeispiel muss der Vorschubantrieb 34, der hier als Beispiel dem Werkzeugträger 22 zugeordnet ist, zusätzlich in Richtung des Pfeiles P verlagert werden, um die Schwenkebene 3 bzw. die Schneidkantenebene so zu verlagern, dass in ihr die Drehachse 1 liegt.

Auch hier sind zusätzliche Radialbohrer 30 oder Axialbohrer 31 vorgesehen, die durch eine Winkelverdrehung des Werkzeugträgers 22 in eine Arbeitsposition bringbar sind.

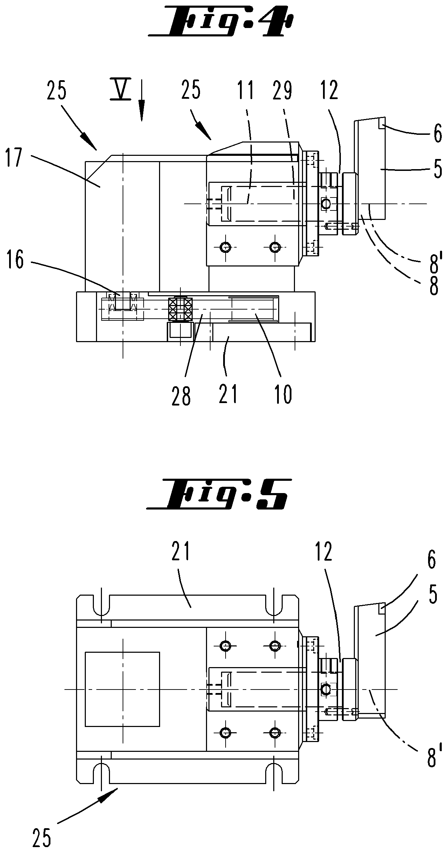

Die Figuren 4 und 5 zeigen ein drittes Ausführungsbeispiel der Erfindung, bei dem das Werkzeugschwenkaggregat 25 einen eigenen Servomotor 17 aufweist, dessen Motorachse einen Rotationsantrieb 16 ausbildet, der mit der Antriebswelle 10 über einen Riementrieb 28 gekoppelt ist. Das Werkzeugschwenkaggregat 25 besitzt eine Befestigungsplatte 21, mit der es auf einem Kreuztisch, am Maschinenbett, bspw. auf einer Konsole oder seitlich im Maschineninnenraum oder an einer anderweitigen Position ortsfest befestigbar ist. Es ist insbesondere vorgesehen, dass das Werkzeugschwenkaggregat auch in einer Vorschubebene verlagerbar ist. Hierzu kann eine gesonderte Verlagerungsvorrichtung vorgesehen sein.

Eine Abtriebswelle 8 trägt den um einen Schwenkwinkel von weniger als 180° verschwenkbaren Halter 5. Der Halter 5 kann aber auch um einen größeren Schwenkwinkel verschwenkt werden.

Die Befestigungsplatte 21 ist auf einer Befestigungsfläche einer Befestigungsstelle 24 befestigbar. Die Befestigungsfläche erstreckt sich in einer Tangentialebene bezogen auf die Drehachse 1. Die Befestigungsplatte 21 erstreckt sich somit in einer Ebene, die senkrecht zu einer Rotationsebene der Abtriebswelle 8 verläuft. Die Erstreckungsebene der Befestigungsplatte 21 wird somit nicht von der Achse 8' der Abtriebswelle geschnitten. Die Befestigungsplatte 21 besitzt an ihrem Rand Einbuchtungen zum Durchtritt von Befestigungsschrauben. Die Drehachse des Rotationsantriebes 16 verläuft hier senkrecht zur Achse 8' der Abtriebswelle 8 und parallel zur Flächennormalen der Erstreckungsebene der Befestigungsplatte 21. Es ist aber auch möglich, dass sich die Achse des Rotationsantriebes 16 parallel zur Achse 8' der Abtriebswelle 8 erstreckt.

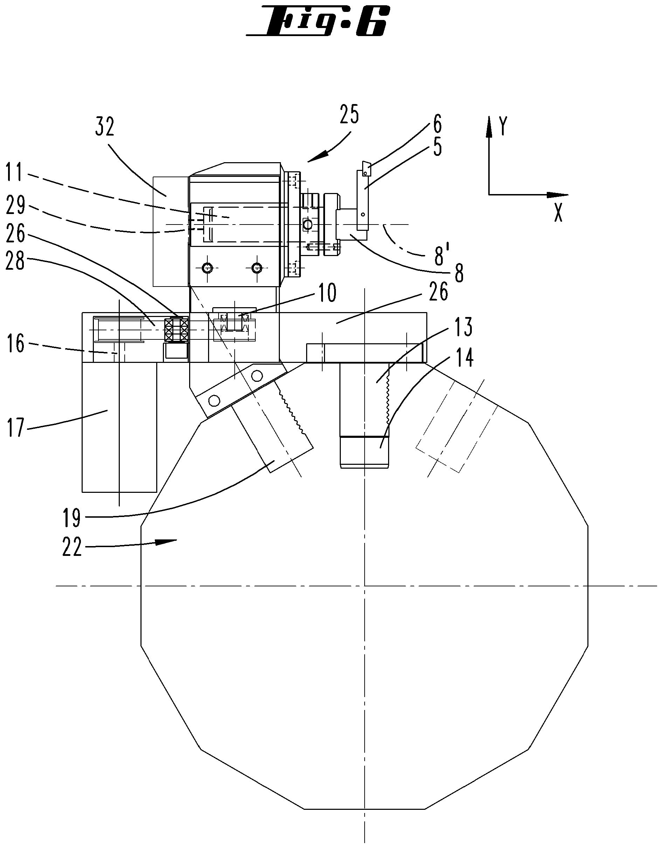

Bei dem in der Figur 6 dargestellten vierten Ausführungsbeispiel sitzt das Getriebegehäuse des Werkzeugschwenkaggregates 25 wie in der Figur 1 versetzt gegenüber dem Befestigungsschaft 13. Der Antrieb der Antriebswelle 10 erfolgt hier aber nicht über den Servomotor der Werkzeugmaschine, sondern durch einen Servomotor 17 des Werkzeugschwenkaggregates 25.

Auch hier erstreckt sich die Rotationsachse 16 des Servomotors 17 parallel zur Antriebswelle 10 und senkrecht zur Achse 8' der Abtriebswelle 8.

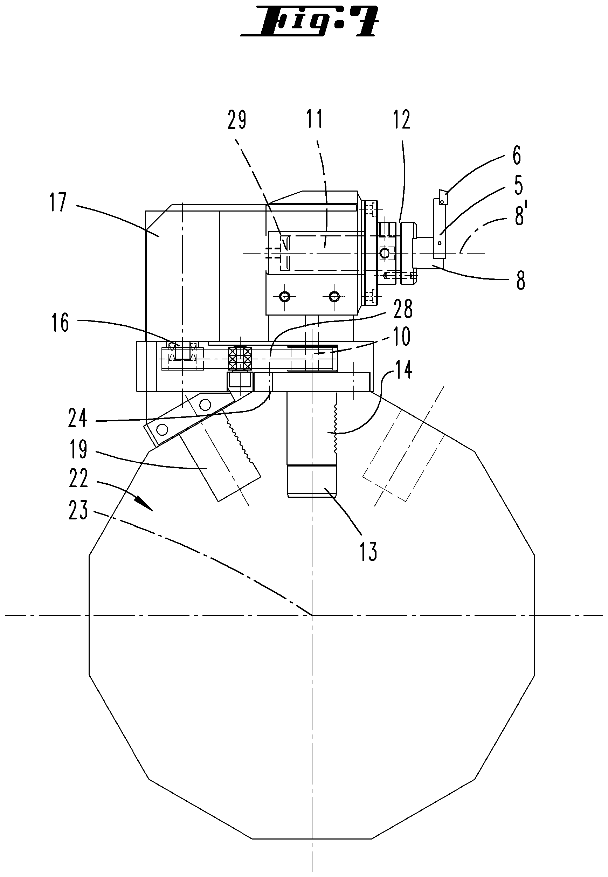

Bei dem in der Figur 7 dargestellten fünften Ausführungsbeispiel besitzt das Getriebegehäuse des Werkzeugschwenkaggregates keinen Versatz gegenüber dem Befestigungsschaft 13. Hier ist aber ebenso wie in dem dritten und in dem vierten Ausführungsbeispiel vorgesehen, dass der Servomotor 17 zum Antrieb der Abtriebswelle 8 dem Werkzeugschwenkaggregat 25 zugeordnet ist.

Bei allen Ausführungsbeispielen kann ein Schwenkwinkelgeber 32 vorgesehen sein, mit dem einer Maschinensteuerung der Schwenkwinkel des Werkzeughalters 5 bzw. der Abtriebswelle 8 übermittelt wird. Es ist aber auch möglich, mit dem Schwenkwinkelgeber 32 die Drehwinkelstellung der Antriebswelle 10 der Werkzeugsteuerung zu geben.

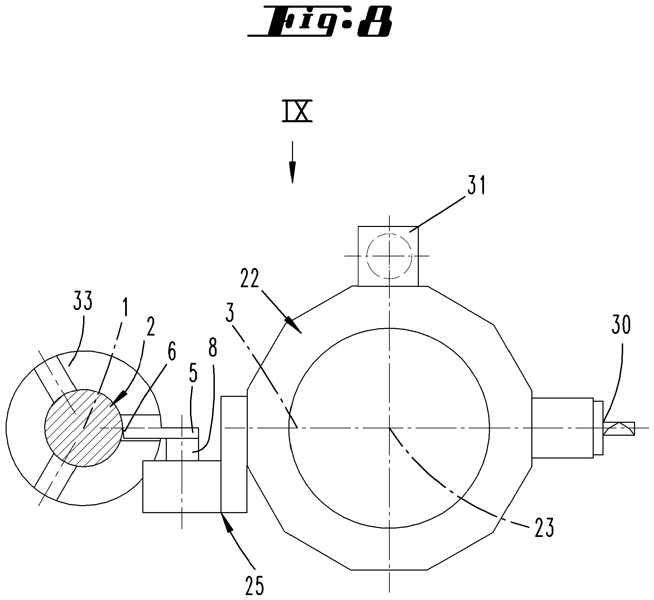

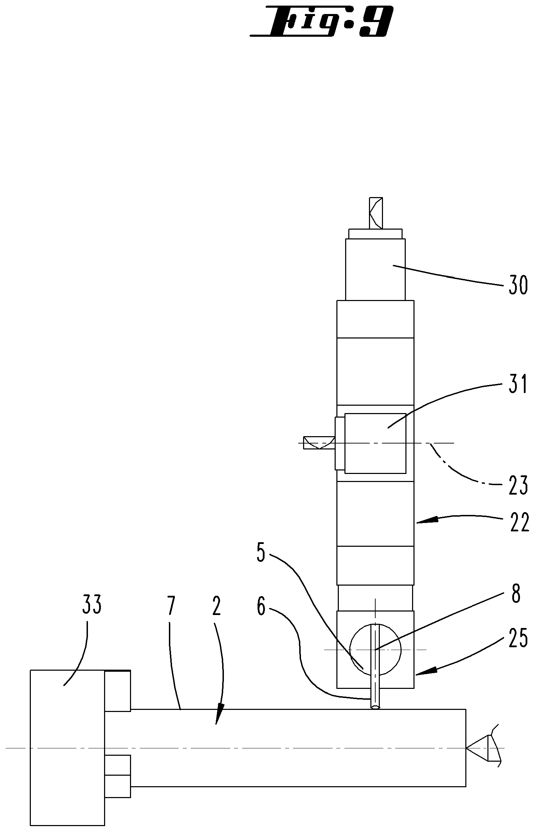

Das in der Figur 8 dargestellte sechste Ausführungsbeispiel zeigt eine Horizontaldrehmaschine in der Seitenansicht mit Blick auf ein Spannfutter 33, welches ein Werkstück 2 trägt, das um die Drehachse 1 drehangetrieben wird. In einer durch die Drehachse 1 und die Revolverachse 23 gehenden Ebene 3 liegt zumindest eine Schneidkante 4 der Schneidplatte 6. Die Figur 9 zeigt die in der Figur 8 dargestellte Horizontaldrehmaschine in einer Ansicht von oben auf die Schwenkebene der Schwenkachse 9. Bei der Drehbearbeitung wandert das Werkstück 2 relativ gegenüber dem Werkzeugträger 22 in der Papierebene von links nach rechts. Dabei macht die Schneidkante 4 der Schneidplatte 6 eine abrollende Bewegung über die zu bearbeitende Fläche 7.

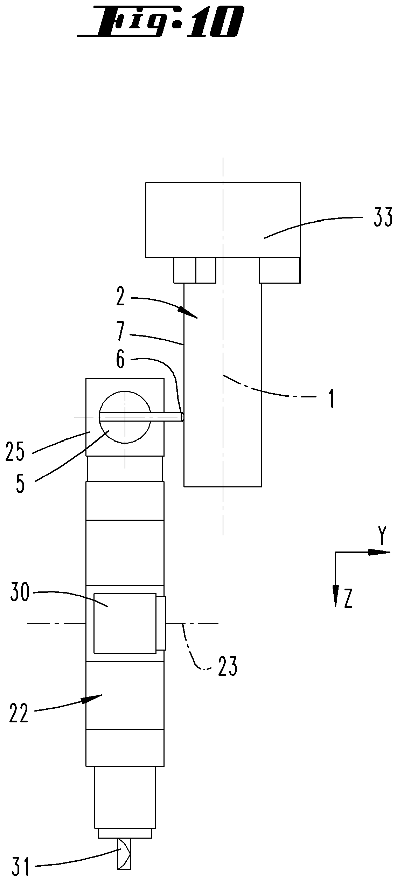

Bei dem in der Figur 10 dargestellten siebten Ausführungsbeispiel handelt es sich um eine Vertikaldrehmaschine in einer Ansicht von vorne auf die Schwenkebene der Schwenkachse. Es handelt sich dabei um ein hängendes Werkstück 2, das in der zuvor beschriebenen Weise bearbeitet wird.

### Liste der Bezugszeichen

| | | | |
|---|---|---|---|
| 1 | Drehachse | 20 | virtuelle Schwenkachse |
| 2 | Werkstück | 20' | virtuelle Schwenkachse |
| 3 | Schneidkantenebe-ne/Schwenkebene | 20" | virtuelle Schwenkachse |
| | | 21 | Befestigungsplatte |
| 4 | Schneidkante | 22 | Werkzeugträger/Revolver |
| 4' | Schneidkante | 23 | Revolverdrehachse |
| 4" | Schneidkante | 24 | Befestigungsstelle |
| 5 | Werkzeughalter | 24' | Befestigungsstelle |
| 6 | Werkzeug/Schneidplatte | 24" | Befestigungsstelle |
| 7 | zu bearbeitende Fläche | 25 | Werkzeugschwenkaggregat |
| 7' | zu bearbeitende Fläche | 26 | Versatzarm |
| 7" | zu bearbeitende Fläche | 27 | Mitnehmer |
| 8 | Abtriebswelle | 28 | Bewegungsübertragungsmittel |
| 8' | Abtriebswellenachse | 29 | Untersetzungsgetriebe |
| 9 | Schwenkachse | 30 | Radialwerkzeug |
| 10 | Antriebswelle | 31 | Axialwerkzeug |
| 10' | Antriebswellenachse | 32 | Schwenkwinkelgetriebe |
| 11 | Winkelgetriebe | 33 | Spannfutter |
| 12 | Verstelleinrichtung | 34 | Vorschubantrieb |
| 13 | Befestigungsschaft | | |
| 14 | Befestigungsöffnung | P | Pfeil |
| 15 | Schaftwelle | R₁ | Radius |
| 15' | Schaftwellenachse | R₂ | Radius |
| 16 | Rotationsantrieb | R₃ | Radius |
| 17 | Servomotor | Y | Raumrichtung, Vorschubebene |
| 18 | Rotationsantrieb | Z | Raumrichtung, Vorschubebene |
| 19 | Stützelement | | |

## Patentansprüche

1. An einer Befestigungsstelle (24) eines Werkzeugträgers (22) einer Drehmaschine befestigbares Werkzeugschwenkaggregat (25), mit einem Befestigungsschaft (13) zum Einstecken in eine Befestigungsöffnung (14) des Werkzeugträgers (22), mit einer Antriebswelle (10), die mit einem Rotationsantrieb (16) eines Servomotors (17) gekuppelt oder mit einem Rotationsantrieb (18) des Werkzeugträgers (22) kuppelbar ist und mittels einer Rotationsbewegung des Rotationsantriebes (16,18) um eine Antriebswellenachse (10') schwenkantreibbar ist, mit einer von der Antriebswelle (10) angetriebenen Abtriebswelle (8), und mit einem drehfest mit der Abtriebswelle (8) verbundenen Werkzeughalter (5) zur Halterung einer Schneidplatte (6), deren Schneidkante (4,4',4") in einer senkrecht zur Abtriebswellenachse (8') sich erstreckenden Schwenkebene (3) liegt, in welcher die Schneidplatte (6) mittels des Rotationsantriebes (16,18) verschwenkbar ist, **dadurch gekennzeichnet, dass** der Befestigungsschaft (13) in der Schwenkebene (3) liegt.

2. Werkzeugschwenkaggregat nach Anspruch 1, **dadurch gekennzeichnet, dass** die Flächennormale einer Anlagefläche des Werkzeugschwenkaggregats zur Anlage an einer Befestigungsfläche der Befestigungsstelle (24) senkrecht zur Abtriebsachse (8) verläuft.

3. Werkzeugschwenkaggregat nach einem der vorhergehenden Ansprüche, **dadurch gekennzeichnet, dass** die Abtriebswelle (8) um 90° gegenüber der Antriebswelle (10) geneigt ist.

4. Werkzeugschwenkaggregat nach einem der vorangehenden Ansprüche, **dadurch gekennzeichnet, dass** die Antriebswelle (10) mit einer im Befestigungsschaft (13) angeordneten Schaftwelle (15) bewegungsgekuppelt ist, wobei die Schaftwelle (15) an ihrem freien Ende einen mit dem Rotationsantrieb (18) kuppelbaren Mitnehmer (27) aufweist.

5. Werkzeugschwenkaggregat nach einem der vorangehenden Ansprüche, **gekennzeichnet durch** ein im Getriebezug zwischen Antriebswelle (10) und Abtriebswelle (8) angeordnetes Winkelgetriebe (11).

6. Werkzeugschwenkaggregat nach einem der vorhergehenden Ansprüche, **dadurch gekennzeichnet, dass** die Antriebswelle (10) parallel und versetzt zum Befestigungsschaft (13) angeordnet ist.

7. Werkzeugschwenkaggregat nach Anspruch 5 oder 6, **dadurch gekennzeichnet, dass** ein das Winkelgetriebe (11) und/oder ein Untersetzungsgetriebe (29) zur Umwandlung der Rotationsbewegung der Antriebswelle (10) in eine Schwenkbewegung der Abtriebswelle (8) aufweisendes Gehäuse vorgesehen ist, das über einen Versatzarm (26) mit dem Befestigungsschaft (13) verbunden ist.

8. Werkzeugschwenkaggregat nach einem der vorangehenden Ansprüche, **gekennzeichnet durch** eine Verstelleinrichtung (12) zur Verstellung der axialen Lage des Halters (5) auf den Abtriebsschaft (8).

9. Werkzeugschwenkaggregat nach einem der vorangehenden Ansprüche, **dadurch gekennzeichnet, dass** sich eine den Rotationsantrieb ausbildende Motorwelle (16) des Servomotors (17) parallel zum Antriebsschaft (15) erstreckt.

10. Vorrichtung zum spanenden Bearbeiten eines um eine Drehachse (1) einer Werkstückspindel rotierenden Werkstücks (2) mit einem relativ parallel zur Drehachse (1) und relativ quer dazu verlagerbaren Werkzeugträger (22), der zumindest eine Befestigungsstelle (24) zur Befestigung eines Werkzeugschwenkaggregats (25) aufweist, **dadurch gekennzeichnet, dass** das Werkzeugschwenkaggregat (25) gemäß eines der vorhergehenden Ansprüche ausgebildet ist.

11. Vorrichtung nach Anspruch 10, **dadurch gekennzeichnet, dass** die Vorrichtung einen Rotationsantrieb (18) aufweist, mit dem die Schaftwelle (15) des Werkzeugschwenkaggregats (25) kuppelbar ist.

12. Vorrichtung nach einem der Ansprüche 10 oder 11, **dadurch gekennzeichnet, dass** der Werkzeugträger (22) ein um eine sich parallel zur Drehachse erstreckende Revolverachse (23) verstellbarer Revolver ist.

13. Vorrichtung nach einem der Ansprüche 10 bis 12, **dadurch gekennzeichnet, dass** der Werkzeugträger (22) in einer Vorschubebene (x, y) relativ gegenüber einem Spannfutter (33) zum Einspannen des Werkstücks (2) verlagerbar ist.

14. Vorrichtung nach einem der Ansprüche 10 bis 13, **dadurch gekennzeichnet, dass** die Drehachse (1) in der Schwenkebene (3) liegt oder in die Schwenkebene (3) bringbar ist.

15. Vorrichtung nach einem der vorangehenden Ansprüche, **gekennzeichnet durch** ein Stützelement (19), zum Unterstützen eines gegenüber dem Befestigungsschaft (13) versetzt angeordneten Abschnitt des Werkzeugschwenkaggregates (25), welches Stützelement (19) insbesondere einen Schaft zum Einstecken in eine Öffnung des Werkzeugträgers (22) aufweist.

## Claims

1. Tool pivot unit (25) that can be mounted at a mounting point (24) of a tool carrier (22) of a lathe, comprising a mounting shank (13) for insertion into a mounting opening (14) in the tool carrier (22), comprising a drive shaft (10) which is coupled to a rotary drive (16) of a servomotor (17) or can be coupled to a rotary drive (18) of the tool carrier (22) and can be driven so as to pivot about a drive shaft axis (10') by means of a rotational movement of the rotary drive (16, 18), comprising an output shaft (8) driven by the drive shaft (10), and comprising a tool holder (5) which is connected to the output shaft (8) for conjoint rotation and is intended for holding a cutting plate (6), the cutting edge (4, 4', 4") of which lies in a pivot plane (3) which extends perpendicularly to the output shaft axis (8') and in which the cutting plate (6) can be pivoted by means of the rotary drive (16, 18), **characterised in that** the mounting shank (13) lies in the pivot plane (3).

2. Tool pivot unit according to claim 1, **characterised in that** the surface normal of a contact surface of the tool pivot unit for contact with a mounting surface of the mounting point (24) extends perpendicularly to the output axis (8).

3. Tool pivot unit according to either of the preceding claims, **characterised in that** the output shaft (8) is inclined by 90° with respect to the drive shaft (10).

4. Tool pivot unit according to any of the preceding claims, **characterised in that** the drive shaft (10) is motion-coupled to a shank shaft (15) arranged in the mounting shank (13), the shank shaft (15), at its free end, having a driver (27) which can be coupled to the rotary drive (18).

5. Tool pivot unit according to any of the preceding claims, **characterised by** a bevel gear (11) arranged in the gear train between the drive shaft (10) and the output shaft (8).

6. Tool pivot unit according to any of the preceding claims, **characterised in that** the drive shaft (10) is arranged in parallel with and so as to be offset with respect to the mounting shank (13).

7. Tool pivot unit according to either claim 5 or claim 6, **characterised in that** a housing is provided which has the bevel gear (11) and/or a reduction gear (29) for converting the rotational movement of the drive shaft (10) into a pivot movement of the output shaft (8), which housing is connected to the mounting shank (13) via an offset arm (26).

8. Tool pivot unit according to any of the preceding claims, **characterised by** an adjusting means (12) for adjusting the axial position of the holder (5) on the output shank (8).

9. Tool pivot unit according to any of the preceding claims, **characterised in that** a motor shaft (16) of the servomotor (17) forming the rotary drive extends in parallel with the drive shank (15).

10. Device for machining a workpiece (2) rotating about an axis of rotation (1) of a workpiece spindle, comprising a tool carrier (22) which can be moved relatively in parallel with the axis of rotation (1) and relatively transversely thereto, and which has at least one mounting point (24) for mounting a tool pivot unit (25), **characterised in that** the tool pivot unit (25) is designed according to any of the preceding claims.

11. Device according to claim 10, **characterised in that** the device has a rotary drive (18) to which the shank shaft (15) of the tool pivot unit (25) can be coupled.

12. Device according to either claim 10 or claim 11, **characterised in that** the tool carrier (22) is a turret which is adjustable about a turret axis (23) that extends in parallel with the axis of rotation.

13. Device according to any of claims 10 to 12, **characterised in that** the tool carrier (22) can be moved in a feed plane (x, y) relative to a chuck (33) for clamping the workpiece (2).

14. Device according to any of claims 10 to 13, **characterised in that** the axis of rotation (1) lies in the pivot plane (3) or can be brought into the pivot plane (3).

15. Device according to any of the preceding claims, **characterised by** a support element (19) for supporting a portion of the tool pivot unit (25) that is arranged so as to be offset relative to the mounting shank (13), which support element (19) in particular has a shank for insertion into an opening in the tool carrier (22).

## Revendications

1. Unité de pivotement d'outil (25) qui peut être fixée à un emplacement de fixation (24) d'un porte-outil (22) d'un tour, avec une queue de fixation (13) destiné à être insérée dans une ouverture de fixation (14) du porte-outil (22), avec un arbre d'entraînement (10) qui est couplé à un entraînement rotatif (16) d'un servomoteur (17) ou qui peut être couplé à un entraînement rotatif (18) du porte-outil (22) et qui peut être entraîné en pivotement autour d'un axe d'arbre d'entraînement (10') au moyen d'un mouvement de rotation de l'entraînement rotatif (16, 18), avec un arbre de sortie (8) entraîné par l'arbre d'entraînement (10), et avec un porte-outil (5) relié solidairement en rotation à l'arbre de sortie (8) et destiné à recevoir une plaquette de coupe (6) dont l'arête de coupe (4, 4', 4") se trouve dans un plan de pivotement (3) s'étendant perpendiculairement à l'axe (8') de l'arbre de sortie dans lequel la plaquette de coupe (6) peut pivoter au moyen de l'entraînement rotatif (16, 18), **caractérisé en ce que** la queue de fixation (13) se trouve dans le plan de pivotement (3).

2. Unité de pivotement d'outil selon la revendication 1, **caractérisée en ce que** la normale à une surface d'appui de l'unité de pivotement d'outil pour l'appui contre une surface de fixation de l'emplacement de fixation (24), est perpendiculaire à l'axe de sortie (8).

3. Unité de pivotement d'outil selon l'une des revendications précédentes, **caractérisée en ce que** l'arbre de sortie (8) est incliné de 90° par rapport à l'arbre d'entraînement (10).

4. Unité de pivotement d'outil selon l'une des revendications précédentes, **caractérisée en ce que** l'arbre d'entraînement (10) est couplé en mouvement à un arbre de queue (15) agencé dans la queue de fixation (13), l'arbre de queue (15) présentant à son extrémité libre un entraîneur (27) qui peut être couplé à l'entraînement rotatif (18).

5. Unité de pivotement d'outil selon l'une des revendications précédentes, **caractérisée par** un engrenage angulaire (11) agencé dans le train d'engrenages entre l'arbre d'entraînement (10) et l'arbre de sortie (8).

6. Unité de pivotement d'outil selon l'une des revendications précédentes, **caractérisée en ce que** l'arbre d'entraînement (10) est agencé parallèlement et décalé par rapport à la queue de fixation (13).

7. Unité de pivotement d'outil selon la revendication 5 ou 6, **caractérisée en ce qu'**il est prévu un boîtier qui présente l'engrenage angulaire (11) et/ou un réducteur (29) pour convertir le mouvement de rotation de l'arbre d'entraînement (10) en un mouvement de pivotement de l'arbre de sortie (8) et qui est relié à la queue de fixation (13) par un bras de déport (26).

8. Unité de pivotement d'outil selon l'une des revendications précédentes, **caractérisée par** un dispositif de réglage (12) pour régler la position axiale du porte-outil (5) sur l'arbre de sortie (8).

9. Unité de pivotement d'outil selon l'une des revendications précédentes, **caractérisée en ce qu'**un arbre moteur (16) du servomoteur (17) formant l'entraînement rotatif s'étend parallèlement à l'arbre d'entraînement (15).

10. Dispositif d'usinage d'une pièce (2) tournant autour d'un axe de rotation (1) d'une broche porte-pièce, avec un porte-outil (22) pouvant être déplacé relativement parallèlement à l'axe de rotation (1) et relativement manière transversalement à celui-ci et présentant au moins un emplacement de fixation (24) pour la fixation d'une unité de pivotement d'outil (25), **caractérisé en ce que** l'unité de pivotement d'outil (25) est réalisée selon l'une des revendications précédentes.

11. Dispositif selon la revendication 10, **caractérisé en ce que** le dispositif comprend un entraînement rotatif (18) avec lequel l'arbre de queue (15) de l'unité de pivotement d'outil (25) peut être couplé.

12. Dispositif selon l'une des revendications 10 ou 11, **caractérisé en ce que** le porte-outil (22) est une tourelle réglable autour d'un axe de tourelle (23) s'étendant parallèlement à l'axe de rotation.

13. Dispositif selon l'une des revendications 10 à 12, **caractérisé en ce que** le porte-outil (22) est déplaçable dans un plan d'avance (x, y) par rapport à un mandrin de serrage (33) de la pièce (2).

14. Dispositif selon l'une des revendications 10 à 13, **caractérisé en ce que** l'axe de rotation (1) se situe dans le plan de pivotement (3) ou peut être amené dans le plan de pivotement (3).

15. Dispositif selon l'une des revendications précédentes, **caractérisé par** un élément de support (19) destiné à supporter une partie de l'unité de pivotement d'outil (25) agencée de manière décalée par rapport à la queue de fixation (13), lequel élément de support (19) présente en particulier une queue destinée à être insérée dans une ouverture du porte-outil (22).
